(19) Europäisches Patentamt
European Patent Office
Office européen des brevets

(11) Veröffentlichungsnummer: **0 073 894**
**B1**

(12) # EUROPÄISCHE PATENTSCHRIFT

(45) Veröffentlichungstag der Patentschrift: **29.01.86**

(51) Int. Cl.⁴: **E 21 B 43/22**

(21) Anmeldenummer: **82105950.8**

(22) Anmeldetag: **03.07.82**

(54) **Verfahren zur Gewinnung von Öl aus einer unterirdischen Lagerstätte.**

(30) Priorität: **01.09.81 DE 3134530**

(43) Veröffentlichungstag der Anmeldung:
**16.03.83 Patentblatt 83/11**

(45) Bekanntmachung des Hinweises auf die Patenterteilung:
**29.01.86 Patentblatt 86/5**

(84) Benannte Vertragsstaaten:
**AT BE DE FR GB IT NL SE**

(73) Patentinhaber: **HÜLS AKTIENGESELLSCHAFT,**
***Patentabteilung / PB 15 - Postfach 13 20,***
**D-4370 Marl 1 (DE)**

(72) Erfinder: **Balzer, Dieter, Dr., Griesheimer Strasse 18,**
**D-4370 Marl (DE)**
Erfinder: **Kosswig, Kurt, Dr., Hoechster Strasse 10,**
**D-4370 Marl (DE)**

(56) Entgegenhaltungen:
**EP - A - 0 047 369**
**EP - A - 0 047 370**
**EP - A - 0 058 371**
**EP - A - 0 058 871**
**US - A - 4 110 228**

**TENSIDE DETERGENTS, Band 16, Nr. 5, 1979, Seiten 256-261, Carl Hansen Verlag, München, DE. D. BALZER et al.: "Die Phasen-Inversions-Temperatur als Auswahlkriterium für Tenside bei der tertiären Erdölgewinnung"**
**TENSIDE DETERGENTS, Band 14, Nr. 5, September/Oktober 1977, Seiten 237-239, Carl Hansen Verlag, München, DE. H. STACHE et al.: "Carboxymethylierte Oxäthylate als Tenside für die tertiäre Erdölgewinnung"**

(56) Entgegenhaltungen: (Fortsetzung)
**TENSIDE DETERGENTS, Band 17, Nr. 1, 1980, Seiten 10-12, Carl Hansen Verlag, München, DE. E. KUNKEL: "Beitrag zur Analytik carboxymethylierter Oxethylate"**

EP 0 073 894 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Bei der Gewinnung von Öl aus ölführenden Lagerstätten gelingt es im allgemeinen nur, einen Bruchteil des ursprünglich vorhandenen Öls durch primäre Gewinnungsverfahren zu fördern. Hierbei gelangt das Öl infolge des natürlichen Lagerstättendrucks an die Erdoberfläche. Bei der sekundären Ölgewinnung wird Wasser in einer oder mehrerer Injektionsbohrungen der Formation eingepresst und das Öl zu einer oder mehreren Produktionsbohrungen getrieben und sodann an die Erdoberfläche gebracht. Dieses sogenannte Wasserfluten als Sekundärmassnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die gegenwärtige Ölverknappung volkswirtschaftlich dringend erforderlich ist, gelingt durch tertiäre Massnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs- oder Mischungsfluten, thermische Ölgewinnungsverfahren, Tensid- oder Polymerfluten bzw. als Kombination von mehreren der genannten Verfahren einordnen.

Thermische Gewinnungsverfahren beinhalten die Injizierung von Dampf oder heissem Wasser bzw. sie erfolgen als Insitu-Verbrennung. Lösungs- oder Mischungsverfahren bestehen im Injizieren eines Lösungsmittels für das Erdöl in die Lagerstätte, wobei dies ein Gas und/oder eine Flüssigkeit sein kann.

Tensidflutprozesse – je nach Tensidkonzentration, gegebenenfalls Tensidtyp und Zusätzen unterscheidet man tensidgestütztes Wasserfluten, übliches Tensidfluten (Lowtension flooding), micellares Fluten und Emulsionsfluten – beruhen in erster Linie auf einer starken Erniedrigung der Grenzflächenspannung zwischen Öl und Flutwasser. In einigen Fällen jedoch, insbesondere in Gegenwart höherer Tensidkonzentrationen, entstehen Wasser-in-Öl-Dispersionen mit, verglichen zum Öl, deutlich erhöhter Viskosität, so dass hier das Tensidfluten auch auf eine Verkleinerung des Mobilitätsverhältnisses zielt, wodurch der Wirkungsgrad der Ölverdrängung erhöht wird. Reines Polymerfluten beruht überwiegend auf dem zuletzt beschriebenen Effekt des günstigeren Mobilitätsverhältnisses zwischen Öl und nachflutendem Wasser.

Die vorliegende Erfindung bezieht sich auf ein Verfahren zur Gewinnung von Öl durch Tensidfluten. Als ölmobilisierende Tenside wurden bislang vor allem organische Sulfonate, wie Alkyl-, Alkylaryl- oder Petroleumsulfonate, beschrieben. Diese besitzen jedoch eine sehr niedrige Toleranzgrenze gegenüber der Salinität der Lagerstättenwässer. Bereits Salzkonzentrationen von 1 000 ppm gelten als problematisch, wobei die Empfindlichkeit dieser Tenside gegenüber Erdalkaliionen besonders ausgeprägt ist. Hier wird als obere kritische Grenzkonzentration ca. 500 ppm angenommen (US-PS 4 110 228). In Gegenwart höherer Salzkonzentrationen bilden sich bei Einsatz dieser Tenside Fällungsprodukte, die zu Verstopfungen der Formation führen können. Da jedoch viele Lagerstättenwässer wesentlich höhere Salinitäten besitzen, z.B. in Norddeutschland bis zu 250 000 ppm, hat man nach Wegen gesucht, die sonst gut ölmobilisierenden Eigenschaften der organischen Sulfonate auch für höher salinare Lagerstättensysteme nutzbar zu machen. Im Gemisch mit Cosurfactants, wie Alkoholen oder nichtionischen Tensiden, zeigten sich organische Sulfonate auch weniger elektrolytempfindlich, allerdings war dann meist auch die ölmobilisierende Wirkung verschlechtert.

Im Gegensatz zu dieser Substanzgruppe zeigen Alkyl- bzw. Alkylarylpolyglykolethersulfate oder carboximethylierte Alkyl- bzw. Alkylaryloxethylate eine gute Verträglichkeit selbst mit extrem hohen Salinitäten (z.B. 250 000 ppm) der Lagerstättenwässer. Da die ölmobilisierende Wirkung dieser Tenside gut (H. J. Neumann, DGMK BERICHTE, Bericht 164 (1978), D. Balzer und K. Kosswig, Tenside Detergents 16, 256 (1979)) sowie ihre Herstellung einfach und wirtschaftlich ist, sind diese Substanzklassen für den Einsatz bei der Ölverdrängung in mittel- und hochsalinaren Lagerstättensystemen (10 000 bis 250 000 ppm Gesamtsalzgehalt) sehr geeignet.

Bei zahlreichen Untersuchungen zur Restölmobilisierung von Modellformationen mit carboximethylierten Oxethylaten als Tensiden wurden jedoch beobachtet, dass der Transport der Ölbank durch die Formation von einem starken Druckanstieg begleitet wird. So wurde selbst bei relativ hochpermeablen künstlichen Formationen Druckgradienten bis zu etwa 40 bar/m beobachtet, die bei Übertragung in das Feld zu Drucken weit oberhalb des petrostatischen Drucks führen und damit den Einsatz dieser Tenside bei der tertiären Erdölgewinnung ausschliessen würden. Auf Druckgradienten von ähnlicher Grössenordnung wird auch in der Literatur hingewiesen (C. Marx, H. Murtada, M. Burkowsky, Erdöl Erdgas Zeitschrift 93, 303 (1977)). Die Autoren erklären die hohen Druckdifferenzen mit der Bildung von Emulsionszonen, die sich jedoch auf den Bereich der Flutfront beschränken sollen. Bei unseren Versuchen war allerdings eine lokale Begrenzung des Druckgradienten nicht zu erkennen. Und da Rohölemulsionen, stabilisiert durch carboximethylierte Oxethylate, strukturviskos sind, lassen sich die hohen Druckdifferenzen auch durch eine Herabsetzung der Flutgeschwindigkeit nicht beliebig absenken. Folglich wäre beim Tensidfluten mit carboxymethylierten Oxethylaten im Feldversuch mit unbeherrschbar hohen Druckgradienten zu rechnen.

Es bestand daher die Aufgabe, für die gut ölmobilisierenden carboximethylierten Oxethylate eine Vorgehensweise des Tensidflutens zu finden, die nicht zu hohen Druckgradienten führt. Eine Erniedrigung des Druckgradienten ist dadurch möglich, dass durch geeignete Anpassung der Tensidmenge an die Lagerstätte ein stark verzögerter Tensiddurchbruch angestrebt wird. Allerdings setzt diese Verfahrensweise homogene Formationen voraus, wie sie zwar bei künstlichen Sandschüttungen, kaum jedoch bei eigentlichen Lagerstätten gegeben sind. Eine Lösung der Aufgabe wird daher auf diese Weise kaum möglich sein.

Diese Aufgabe wurde überraschend durch Verlassen einer auch in der Literatur belegten Arbeitshypothese gelöst, derzufolge eine wirksame Restentölung nur dann möglich ist, wenn die Bedingungen für das Vorliegen einer w/o-Emulsion möglichst während des gesamten Flutprozesses gegeben sind (U. Lepper, Erdöl Erdgas, Zeitschrift 92, 426 (1976)). Nach D. Balzer und K. Kosswig, Tenside Detergents 16, 256 (1979) bedeutet dies, dass die Phasen-Inversions-Temperatur (PIT) des Systems Original-Rohöl und -Formationswasser sowie Tensid und gegebenenfalls Zusätze deutlich unterhalb der Lagerstättentemperatur liegen muss, und zwar bis zu 15 °C. Bei unter diesen Bedingungen an Modellformationen durchgeführten Flutversuchen wurden gewöhnlich sehr wirksame Entölungen beobachtet, wobei das Rohöl ganz überwiegend emulsionsfrei ausgeflutet werden konnte. Jedoch treten bei dieser Arbeitsweise sehr häufig hohe Druckgradienten auf.

Es wurde nun gefunden, dass sich der Druckgradient bei guter Entölung in ansehnlicher Weise senken lässt durch ein Verfahren zur Gewinnung von weitgehend emulsionsfreiem Öl aus einer unterirdischen Lagerstätte mittlerer oder hoher Salinität durch Einpressen einer 0,1 bis 20%igen Lösung oder Dispersion in Formationswasser von carboximethylierten Oxethylaten der Formel:

$$R-(OCH_2CH_2)_n-OCH_2-COOM,$$

in der R einen linearen oder verzweigten aliphatischen Rest mit 4 bis 20 Kohlenstoffatomen oder einen alkyl- oder dialkylaromatischen Rest mit 1 bis 14 Kohlenstoffatomen in der Alkylgruppe, n 1 bis 30 und M ein Alkali- oder Erdalkali-Metallion oder Ammonium bedeutet und der Carboximethylierungsgrad zwischen 10 und 90% liegt, in eine Injektionsbohrung, wobei das Tensid so ausgewählt wird, dass die Phasen-Inversions-Temperatur des Systems Rohöl/Formationswasser/Tensid/gegebenenfalls Zusätze 0 bis 10 °C oberhalb der Lagerstättentemperatur liegt, das dadurch gekennzeichnet ist, dass ein-, zwei- und dreiwertige Alkohole der Tensidlösung oder -dispersion als Cosurfactant zugefügt werden. Zweckmässigerweise liegt die Phasen-Inversions-Temperatur des Systems Rohöl/Formationswasser/Tensid/gegebenenfalls Zusätze 1 bis 5 °C oberhalb der Lagerstättentemperatur. Vorzugsweise werden als Zusätze in Formationswasser lösliche Erdalkalisalze verwendet. Bei einer optimalen Ausführungsform des Verfahrens werden vor und/oder nach der Injektion der Tensidlösung 0,01 bis 4 PV Formationswasser in die Lagerstätte eingepresst. Vorzugsweise enthält das Formationswasser ein viskositätserhöhendes Polymer. Zweckmässigerweise hat das Tensid einen Carboximethylierungsgrad zwischen 30 und 90%.

Die Senkung des Druckgradienten war insofern äusserst überraschend, als der betreffende Temperaturbereich das Zustandsgebiet einer o/w-Emulsion ist.

Wählt man nämlich ein solches Tensid, das bezüglich des Lagerstättensystems eine PIT um 11 °C und höher oberhalb der Lagerstättentemperatur besitzt, und befindet sich damit im Zustandsbereich der o/w-Emulsion, so ist die Mobilisierung des Restöls wenig wirksam und das Öl wird ganz überwiegend als Emulsion gefördert.

Die PIT selbst wird mit Hilfe der Messung der elektrischen Leitfähigkeit bestimmt. Hierzu wird eine Emulsion, bestehend aus dem Rohöl und dem Formationswasser der betreffenden Lagerstätte (Phasenverhältnis 1:1) und dem Tensid (2%, bezogen auf die wässrige Phase) sowie gegebenenfalls Zusätzen, hergestellt, und ihre elektrische Leitfähigkeit in Abhängigkeit von der Temperatur gemessen. Bei der PIT schlägt eine o/w-Emulsion in eine w/o-Emulsion um bzw. umgekehrt, wobei die elektrische Leitfähigkeit sprungartig sinkt bzw. steigt. Genau genommen ist dies ein Temperaturbereich von wenigen Grad C. Registriert als PIT wird die Temperatur, bei der die elektrische Leitfähigkeit den Mittelwert zwischen oberem (o/w) und unterem (w/o) Niveau erreicht.

Die vorliegende Erfindung bezieht sich auf den Einsatz von carboximethylierten Oxethylaten als ölmobilisierende Tenside. Man kann diese Verbindungen nach DE-C-24 18 444 durch Umsetzung von Oxethylaten der Formel $R-(O-CH_2-CH_2)_nOH$ mit einem Salz der Chloressigsäure in Gegenwart von Alkalihydroxid oder Erdalkalihydroxid herstellen. Aber auch andere Herstellungsverfahren sind geeignet. R bedeutet hierbei einen gesättigten oder ungesättigten, geradkettigen oder verzweigten Alkylrest mit 4 bis 20, vorzugsweise 8 bis 16 C-Atomen, oder einen Alkylarylrest mit 1 bis 14 C-Atomen im Alkylrest. n kann Werte von 1 bis 30, vorzugsweise von 1 und 20, annehmen. Das Kation kann Natrium, Kalium, Lithium, Ammonium, Calcium oder Magnesium sein. Als Alkohole und Phenole, deren Oxethylate den Carboximethylaten zugrunde liegen, lassen sich z.B. einsetzen: Butylalkohol, Hexylalkohol, Octylalkohol, Nonylalkohol, Decylalkohol, Undecyl-, Lauryl-, Tridecyl-, Myristil-, Palmityl- und Stearylalkohol, aber auch ungesättigte Alkohole, wie z.B. Oleylalkohol. Die Alkylkette kann dabei normal- oder verzweigtkettig sein. Besonders zweckmässig werden handelsübliche Gemische dieser Alkohole herangezogen. Als Alkylphenole lassen sich z.B. einsetzen: Kresol, Ethylphenol, Propylphenol, Butylphenol, Hexylphenol, Octylphenol, Nonylphenol, Decylphenol, Undecylphenol, Dodecylphenol, Tridecylphenol, Tetradecylphenol. Die Alkylkette kann normal- oder

verzweigtkettig sein. Insbesondere lassen sich handelsübliche Gemische solcher Alkylphenole einsetzen.

Die Oxethylierung kann in Gegenwart katalytischer Mengen Alkalihydroxid mit 3 bis 30, vorzugsweise 3 bis 15 Mol, Ethylenoxid durchgeführt werden. Die entstehenden Gemische haben annähernd eine Poisson-Verteilung.

Entsprechend ihrer Herstellung enthalten die carboximethylierten Oxethylate stets noch ansehnliche Mengen nicht umgesetztes Oxethylat. Mit der Formel $R-(OCH_2-CH_2)_n-OCH_2-COOM$ ist daher stets ein Gemisch mit unterschiedlichen Mengen an nicht umgesetztem Oxethylat gemeint. Demgemäss lässt sich ein Carboximethylierungsgrad definieren. Es hat sich gezeigt, dass Mischungen mit einem Carboximethylierungsgrad zwischen 10 und 90%, vorzugsweise zwischen 30 und 90%, das Öl wirksam zu verdrängen vermögen. Besonders wirksam sind Mischungen mit Carboximethylierungsgraden von 50 bis 85%, mit der Angabe % sind stets Gewichtsprozente gemeint.

Die beschriebenen Mischungen aus anionischem und nichtionischem Tensid, carboximethylierte Oxethylate genannt, sind in üblichen Lagerstättenwässern löslich oder zumindest gut dispergierbar, wobei keinerlei Ausfällungen beobachtet werden.

Erfindungsgemäss geht man folgendermassen vor: Bei Kenntnis der Lagerstättentemperatur bzw. gegebenenfalls eines Temperaturbereiches wird aus dem Rohöl, dem Formationswasser und gegebenenfalls dem Gas der Lagerstätte und einem geeignet scheinenden carboximethylierten Oxethylat der o.a. Formel orientierend die PIT gemessen. Diese Messung ist gegebenenfalls mit weiteren Tensiden dieser Klasse und gegebenenfalls Zusätzen zu wiederholen.

Auf der Basis der Messergebnisse erfolgt das Massschneidern des carboximethylierten Oxethylats, dessen ölmobilisierende Wirksamkeit für das betreffende Lagerstättensystem durch einen oder mehrere Vorversuche in einer Sandschüttung als Modellformation oder an Originalbohrkernen selbst verifiziert werden kann.

Die Natriumsalze der carboximethylierten Oxethylate, die durch Umsetzung von Oxethylaten mit Chloressigsäure bei Gegenwart von Natronlauge hergestellt werden, bieten mehrere Ansatzpunkte für die «Molekulararchitektur» mit dem Ziel, in einem bestimmten System eine gewünschte Phasen-Inversions-Temperatur einzustellen:

$$R-(OCH_2CH_2)_n-OH + ClCH_2COOH \xrightarrow[-NaCl-H_2o]{+2\,NaOH}$$

$$R-(OCH_2CH_2)_n-CH_2COONa.$$

| R | n | Umsatz |
|---|---|---|
| variabel | variabel | variabel |

Die Salze der carboximethylierten Oxethylate setzen sich aus drei variablen Bausteinen zusammen: dem hydrophoben Rest R, der Oxethylatkette und der Carboximethylgruppe, deren Anteil in dem erhaltenen Produktgemisch durch Steuerung des Umsatzes des Ausgangsoxethylates mit Chloressigsäure in weiten Grenzen verändert werden kann.

Als Ausgangsstoffe für den hydrophoben Rest R kommen beispielsweise lineare und verzweigte (Fett)alkohole infrage, ferner Alkylphenole mit beliebigen Alkylresten. Einen Eindruck von dem Einfluss des Alkylrestes auf die Phasen-Inversions-Temperatur in einem bestimmten System vermittelt die Tabelle 1.

Tabelle 1

Abhängigkeit der PIT von der Länge des Alkylrestes in den Natriumsalzen carboximethylierter Fettalkoholoxethylate mit 4,4 EO und bei einem Umsetzungsgrad von 65%; Rohöl A (s. D. Balzer und K. Kosswig, loc. cit.), Formationswasser A (s. D. Balzer und K. Kosswig, loc. cit.), Phasenverhältnis 1:1, 2% Tensid

| C-Zahl im Alkylrest | PIT (°C) |
|---|---|
| 12 | 74 |
| 13*) | 53 |
| 14 | 41 |
| 16 | 37 |

*) 1:1-Mischung aus $C_{12}$ und $C_{14}$

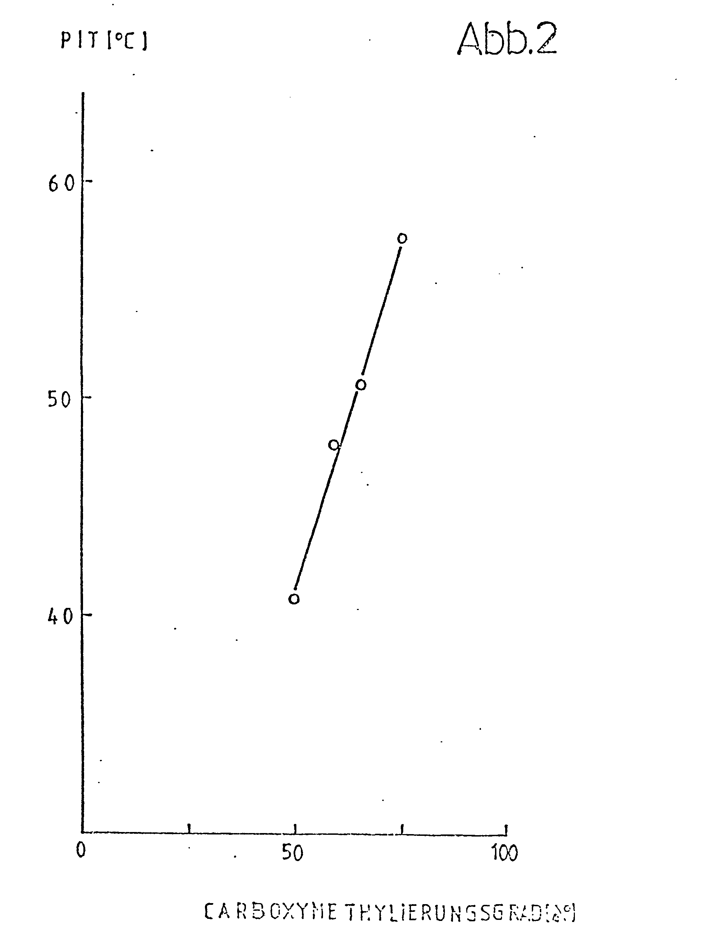

In den Abbildungen 1 und 2 sind die Abhängigkeiten der Phasen-Inversions-Temperatur in einem bestimmten System vom Oxethylierungsgrad und vom Umsatz bei der Carboximethylierung wiedergegeben. In beiden Fällen wurden Rohöl A und Formationswasser A im Phasenverhältnis 1:1 und 2% Tensid eingesetzt. In Abbildung 1 sind die Tenside zu 70% carboximethylierte Isononylphenoloxethylate verschiedenen Oxethylierungsgrades, in Abbildung 2 in verschiedenen Graden mit Chloressigsäure umgesetzte Isononylphenoloxethylate mit 5,5 EO.

Die Tabelle 1 und die Abbildungen 1 und 2 demonstrieren die Variabilität, die uns die Klasse der carboximethylierten Oxethylate, die letztlich Gemische aus ionischen und nichtionischen Tensiden darstellen, bietet bezüglich der Lagerstättenbedingungen.

Ferner können gegebenenfalls das Volumen der zu injizierenden Tensidlösung, ihre Konzentration und eventuelle Zusätze sowie ferner die Art und Grösse der die Mobilität kontrollierenden Polymerlösung anhand von Modell-Flutversuchen optimiert werden. Aufgrund der Ergebnisse dieser Vorversuche wird die Tensidlösung mit Hilfe von Injektionspumpen in die Lagerstätte eingebracht. Hierbei kann die Tensidlösung entweder kontinuierlich oder in Form eines Slugs, d.h. eines eng begrenzten Volumens von 0,05 bis 4,0 PV (= Vielfaches des Porenvolumens der Lagerstätte) eingesetzt werden. Die Grösse des Slugs richtet sich vor allem nach der Konzentration der Tensidlösung und nach der Wirtschaftlichkeit.

Zweckmässigerweise geht dem Tensidfluten

ein Wasserfluten voraus, wobei als Flutflüssigkeit das produzierte Formationswasser eingesetzt wird. Die Grösse dieses Wasserslugs beträgt 0,01 bis 4 PV, vorzugsweise 0,05 bis 1,0 PV. Dem Tensidslug nachgeschaltet injiziert man zweckmässigerweise sowohl aus Gründen der Mobilitätskontrolle als auch zum Schutz der Tensidlösung vor eindringendem Formationswasser einen Polymerslug in die Lagerstätte. Hierzu wird ein Polymer oder Polymergemisch in einer solchen Konzentration in dem Formationswasser gelöst, dass die Viskosität 4- bis 6mal so hoch ist wie die des Öls. Bei Lagerstätten mittlerer und höherer Salinität (3 bis 28%) kommen hier insbesondere Biopolymere, wie Polysacharide oder Cellulosederivate, die in Gegenwart der erhöhten Salzkonzentration noch eine ausreichende Viskosität besitzen und keine Fällungen zeigen, infrage.

Aus Gründen einer günstigeren Viskositätsanpassung der Tensidlösung an das Öl der Lagerstätte oder zur Verminderung der Tensid- bzw. gegebenenfalls der Polymerretention werden dem Tensid- bzw. dem Polymerslug Alkohole, Glykole oder 3-wertige Alkohole als Cosurfactants zugefügt. Geeignete Co-surfactants sind hier z.B. i-Propanol, 1-Butanol, n-Butanol, t-Amylalkohol, 2-Ethylhexanol, Butyldiglykol, Butyltriglykol.

Bei Formationswässern, die relativ arm an Erdalkaliionen sind, kann es sich als zweckmässig erweisen, der Tensidlösung sowie dem vor- und nachgefluteten Formationswasser lösliche Erdalkalisalze zuzusetzen. Bei der Anpassung des Tensids an die Lagerstätte, d.h. also bei der Messung der PIT, müssen diese Zusätze berücksichtigt werden.

Zweckmässigerweise schliesst sich an das Injizieren der Polymerlösung normales Wasserfluten an. Dieses wird solange fortgesetzt, wie sich wirtschaftlich Öl gewinnen lässt.

**Patentansprüche**

1. Verfahren zur Gewinnung von weitgehend emulsionsfreiem Öl aus einer unterirdischen Lagerstätte mittlerer oder hoher Salinität durch Einpressen einer 0,1 bis 20%igen Lösung oder Dispersion in Formationswasser von carboximethylierten Oxethylaten der Formel:

$$R-(OCH_2CH_2)_n-OCH_2-COOM,$$

in der R einen linearen oder verzweigten aliphatischen Rest mit 4 bis 20 Kohlenstoffatomen oder einen alkyl- oder dialkylaromatischen Rest mit 1 bis 14 Kohlenstoffatomen in der Alkylgruppe, n 1 bis 30 und M ein Alkali- oder Erdalkali-Metallion oder Ammonium bedeutet und der Carboximethylierungsgrad zwischen 10 und 90% liegt, in eine Injektionsbohrung, wobei das Tensid so ausgewählt wird, dass die Phasen-Inversions-Temperatur des Systems Rohöl/Formationswasser/Tensid/gegebenenfalls Zusätze 0 bis 10 °C oberhalb der Lagerstättentemperatur liegt, dadurch gekennzeichnet, dass ein-, zwei- und dreiwertige Alkohole der Tensidlösung oder -dispersion als Cosurfactant zugefügt werden.

2. Verfahren nach Anspruch 1, dadurch gekennzeichnet, dass die Phasen-Inversions-Temperatur des Systems Rohöl/Formationswasser/Tensid/gegebenenfalls Zusätze 1 bis 5 °C oberhalb der Lagerstättentemperatur liegt.

3. Verfahren nach den Ansprüchen 1 und 2, dadurch gekennzeichnet, dass als Zusätze in Formationswasser lösliche Erdalkalisalze verwendet werden können.

4. Verfahren nach den Ansprüchen 1 bis 3, dadurch gekennzeichnet, dass vor der Injektion der Tensidlösung 0,01 bis 4 PV Formationswasser in die Lagerstätte eingepresst wird.

5. Verfahren nach den Ansprüchen 1 bis 4, dadurch gekennzeichnet, dass nach dem Injizieren der Tensidlösung 0,01 bis 4 PV Formationswasser in die Lagerstätte eingepresst wird.

6. Verfahren nach Anspruch 5, dadurch gekennzeichnet, dass das Formationswasser ein viskositätserhöhendes Polymer enthält.

7. Verfahren nach Anspruch 1, dadurch gekennzeichnet, dass das Tensid einen Carboximethylierungsgrad zwischen 30 und 90% hat.

**Revendications**

1. Procédé pour la récupération d'huile, dans une large mesure exempte d'émulsionnement, à partir d'un gisement souterrain dont la salinité est moyenne ou élevée, par injection sous pression d'une solution ou d'une dispersion à 0,1 à 20% en poids, dans l'eau de la formation, d'oxyéthylates carboximéthyle répondant à la formule générale

$$R-(OCH_2CH_2)_n-OCH_2-COOM$$

où R est un reste aliphatique, linéaire ou ramifié à 4 à 20 atomes de carbone, ou un reste alcoyl- ou dialcoyl-aromatique avec 1 à 14 atomes de carbone dans le groupe alcoyl, n est 1 à 30, et M est un ion métallique alcalin, alcalinoterreux ou ammonium, et le taux de carboximethylation se situe entre 10 et 90%, dans un forage d'injection, l'agent tensioactif étant choisi de façon telle que la température d'inversion de phase du système huile brute/eau de la formation/agent tensio-actif/additifs éventuels se situe de 0 à 10 °C au-dessus de la température du gisement, procédé caractérisé en ce que l'on ajoute, comme co-surfactants, à la solution ou à la dispersion d'agent tensio-actif, des alcools mono-, di et trivalents.

2. Procédé suivant la revendication 1, caractérisé en ce que la température d'inversion de phase du système huile brute/eau de la formation/agent tensio-actif/additifs éventuels de situe 1 à 5 °C au-dessus de la température du gisement.

3. Procédé suivant les revendications 1 et 2, caractérisé en ce que l'on peut utiliser, comme additifs, des sels alcalino-terreux solubles dans l'eau de la formation.

4. Procédé suivant les revendications 1 à 3, caractérisé en ce qu'avant l'injection de l'agent tensio-actif, on injecte sous pression, dans le gisement, 0,01 à 4 PV de l'eau de la formation.

5. Procédé suivant les revendications 1 à 4, caractérisé en ce que, après l'injection de l'agent

tensio-actif, on envoie sous pression dans le gisement, 0,01 à 4 PV de l'eau de la formation.

6. Procédé suivant la revendication 5, caractérisé en ce que l'eau de la formation contient un polymère augmentant la viscosité.

7. Procédé suivant la revendication 1, caractérisé en ce que l'agent tensio-actif a un taux de carboximéthylation qui se situe entre 30 et 90%.

**Claims**

1. Process for obtaining substantially emulsion-free oil from a subterranean formation of medium or high salinity by injecting a 0.1 to 20% strength solution or dispersion, in formation water, of carboxymethylated oxyethylates of the formula

$$R-(OCH_2CH_2)_n-OCH_2-COOM$$

in which R denotes a linear or branched aliphatic radical with 4 to 20 carbon atoms or an alkyl-aromatic or dialkyl-aromatic radical with 1 to 14 carbon atoms in the alkyl group, n denotes 1 to 30 and M denotes an alkali metal ion, alkaline earth metal ion or ammonium, and the degree of carboxymethylation is between 10 and 90%, into an injection bore, the surfactant being so chosen that the phase inversion temperature of the system of crude oil/formation water/surfactant/optional additives is 0 to 10 °C above the temperature of the formation, characterised in that monohydric, dihydric and trihydric alcohols are added as cosurfactant to the surfactant solution or dispersion.

2. Process according to Claim 1, characterised in that the phase inversion temperature of the system crude oil/formation water/surfactant/optional additives is from 1 to 5 °C above the temperature of the formation.

3. Process according to Claims 1 and 2, characterised in that alkaline earth metal salts which are soluble in the formation water may be used as additives.

4. Process according to Claims 1 to 3, characterised in that before injection of the surfactant solution 0.01 to 4 pore volumes of formation water are injected into the formation.

5. Process according to Claims 1 to 4, characterised in that after injection of the surfactant solution 0.01 to 4 pore volumes of formation water are injected into the formation.

6. Process according to Claim 5, characterised in that the formation water contains a polymer which increases the viscosity.

7. Process according to Claim 1, characterised in that the surfactant has a degree of carboxymethylation of between 30 and 90%.

Abb.1

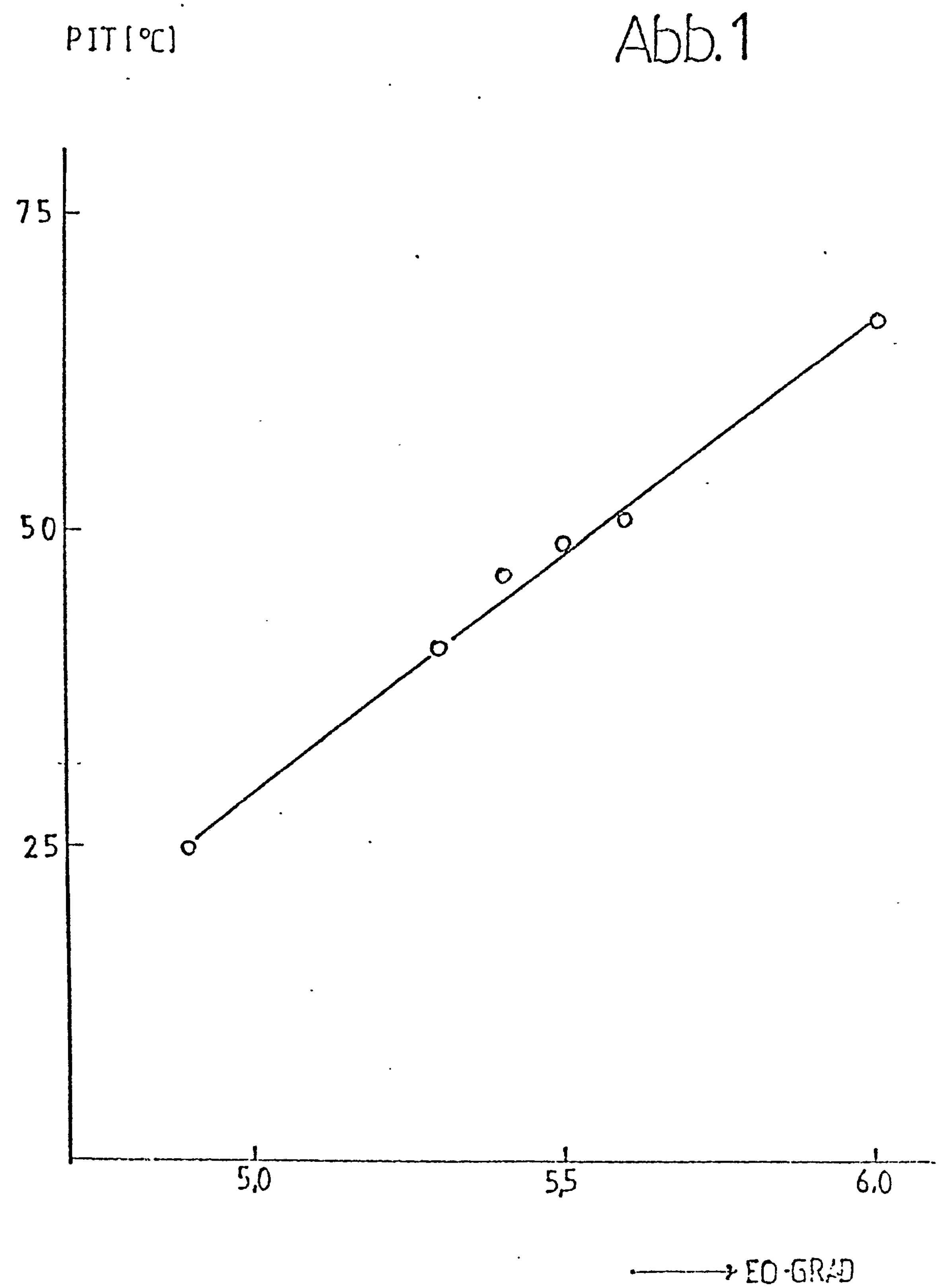

Abb.2